(19) **Europäisches Patentamt**
**European Patent Office**
**Office européen des brevets**

(11) **EP 2 270 638 A1**

(12) **EUROPEAN PATENT APPLICATION**
published in accordance with Art. 153(4) EPC

(43) Date of publication:
**05.01.2011 Bulletin 2011/01**

(21) Application number: **08751630.8**

(22) Date of filing: **25.04.2008**

(51) Int Cl.:
**G06F 3/045** (2006.01)     **G06F 3/041** (2006.01)

(86) International application number:
**PCT/JP2008/001105**

(87) International publication number:
**WO 2009/130744 (29.10.2009 Gazette 2009/44)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **Pioneer Corporation**
**Kanagawa 212-0031 (JP)**

(72) Inventors:
• **FURUKAWA, Yoshihisa**
**Kawasaki-shi**
**Kanagawa 212-0031 (JP)**

• **KAMEI, Kazuo**
**Kawasaki-shi**
**Kanagawa 212-0031 (JP)**

(74) Representative: **Haley, Stephen**
**Gill Jennings & Every LLP**
**Broadgate House**
**7 Eldon Street**
**GB-London EC2M 7LH (GB)**

(54) **RESISTIVE FILM TYPE TOUCH PANEL DEVICE, PROGRAM, AND METHOD FOR DETECTING CONTACT IN RESISTIVE FILM TYPE TOUCH PANEL DEVICE**

(57)     The resistive film type touch panel device comprises two resistive films (11, 12) separated via a plurality of fine elastic members and a plurality of local electrodes provided on the two resistive films (11, 12). The number of contact points and the position of the contact point are obtained by use of a plurality of measurement voltage values obtained by changing a plurality of times the combination of a pair of local electrodes to which voltage is applied. In this case, the number of contact points and the position of the contact point are simultaneously obtained by repeating numeric value computation so that the plurality of measurement voltage values and a calculation voltage value based on a non-linear equation are set to be substantially the same.

FIG. 1

EP 2 270 638 A1

**Description**

TECHNICAL FIELD

The present invention relates to a resistive film type touch panel device, a program, and a method for detecting contact in a resistive film type touch panel device which enable multipoint detection.

BACKGROUND ART

As resistive film type touch panel devices, an analog type touch panel device and a digital type (matrix type) touch panel device have been known. The analog type is higher in resolution than the digital type (matrix type), and is currently commonly used as the touch panel devices.

A generally known analog type touch panel device is configured by overlapping two resistive films each having the same rectangular shape with dot spacers interposed therebetween in such a manner that side electrodes formed along a pair of opposing sides of one resistive film are orthogonal to those of the other resistive film (for example, Patent Document 1) . In the resistive film type touch panel device shown in Fig. 2 of Patent Document 1, voltage is applied to one of the pair of side electrodes and the other side electrode is grounded, so that electric potential changing in parallel with the side electrodes is generated. Specifically, because lines of the electric potential are in parallel (having linearity), in the case where electric potential generated when the resistive film type touch panel device is touched with a finger or the like is detected by the side electrode to which no voltage is applied, the position of the contact point can be obtained as a value that is proportional to the voltage. Thus, it is possible to detect the position of the contact point without the need of complicated computation processes.

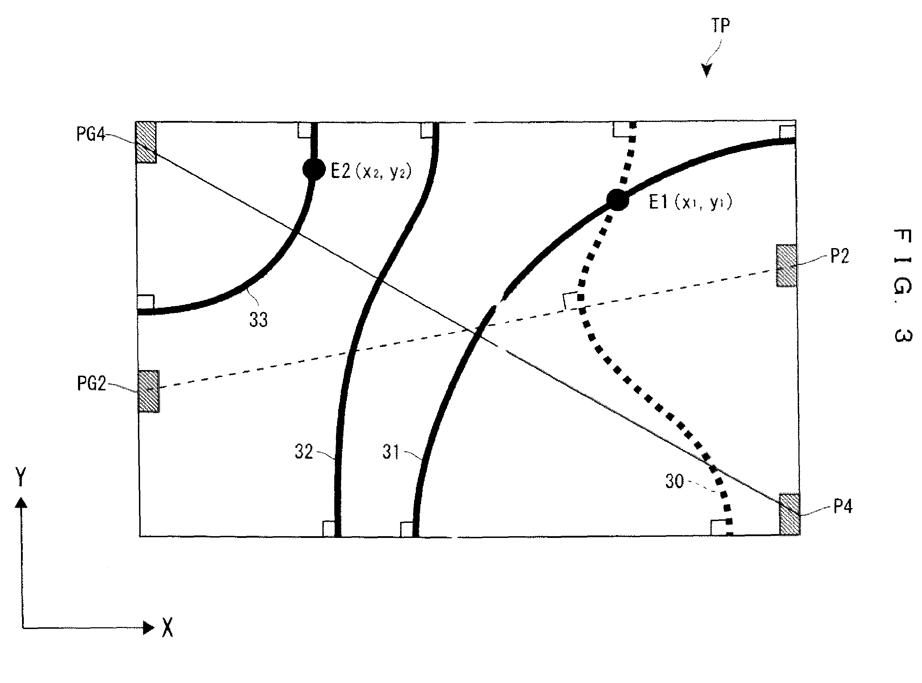

Furthermore, Patent Document 1 describes an example shown in Fig. 3 in which the electrodes are not side electrodes but local electrodes. Local electrodes are employed in some of the touch panels that are already widely used, but they are used in place of side electrodes. When voltage is applied to a local electrode, voltage is simultaneously applied to other electrodes on the side where the electrode is located to generate parallel electric potential substantially similar to that when voltage is applied to a side electrode. Specifically, it is possible to detect the positions of the contact point without the need of complicated computation processes even in the example of Fig. 3.

[Patent Document 1] JP-A-2000-513433 (Fig. 2, Fig. 3, and the like)

DISCLOSURE OF THE INVENTION

[Problems to be Solved]

However, the resistive film type touch panel device of this kind has a configuration in which voltage-applied electrodes are provided on the entire sides (even when divided local electrodes are used, voltage is simultaneously applied to them, so that they are configured to exhibit the same effect as a case in which electrodes are provided on the entire sides), and the position of a contact point is detected by using linearity. Accordingly, when a plurality of positions are simultaneously touched, the voltage value at the barycentric position of the plurality of contact points is output. As a result, when two or more positions are touched, there is a problem that the positions of the contact points cannot be obtained with accuracy.

Currently, in the fields where touch panel devices are already used, there exist many devices to improve efficiency by enabling simultaneous manipulation with plural fingers or to enhance convenience by allowing a plurality of operators to simultaneously manipulate. In addition, there are fields where touch panel devices cannot be used because a plurality of positions cannot be simultaneously detected. As described above, the market need of such touch panel devices that enables detection of plural positions simultaneously touched is increasing.

In view of the foregoing, an object of the present invention is to provide a resistive film type touch panel device, a program, and a method for detecting contact in a resistive film type touch panel device which can detect the number of contact points and the positions of the contact points when a plurality of positions are simultaneously touched.

[Means to Solve the Problems]

The present invention provides a resistive film type touch panel device including: two resistive films that are separated from each other by a minute gap and have substantially the same shape; a plurality of local electrodes that are provided on the two resistive films; a voltage applying unit that selectively applies voltage to the plurality of local electrodes; a voltage measurement unit that measures voltage values by using other electrodes to which no voltage is applied among the plurality of local electrodes; and a computation unit that obtains the number of contact points and positions of the contact points by using a plurality of measurement voltage values obtained by the voltage measurement unit with the voltage applying unit selectively applying voltage to at least one combination of the local electrodes. The computation unit obtains the number of contact points and the positions of the contact points by repeating a numeric value computation so that the plurality of measurement voltage values become substantially equal to calculation voltage values based on a non-linear equation.

The present invention also provides a method for detecting contact in a resistive film type touch panel device including two resistive films that are separated from each other by a minute gap and have substantially the same shape, and a plurality of local electrodes that are provided on the two resistive films. The method includes: selectively applying voltage to the plurality of local electrodes; measuring voltage values by using other electrodes to which no voltage is applied among the plurality of local electrodes; and obtaining the number of contact points and positions of the contact points by repeating a numeric value computation so that a plurality of measurement voltage values obtained by changing combinations of pairs of local electrodes to which voltage is applied for multiple times become substantially equal to calculation voltage values based on a non-linear equation.

With these configurations, a plurality of local electrodes are provided on the respective resistive films, and voltage can be selectively applied to the plurality of local electrodes. Thus, non-linear electric potential can be generated. Furthermore, the combinations of the pairs of local electrodes to which voltage is applied are changed a plurality of times, so that a plurality of measurement voltage values can be obtained. By repeating the numeric value computation so that the measurement voltage values become substantially equal to the calculation voltage values based on the non-linear equation, the number of contact points and the positions of the contact points can be obtained even when a plurality of positions are simultaneously touched.

The two resistive films having "substantially the same shape" means that they are formed in substantially the same shape at least in two-dimensional view (planar view). The shape may be a shape with "sides" such as a rectangle, a parallelogram, or a triangle, or may be a shape without "sides" such as a circle or an oval. Furthermore, the two resistive films are preferably formed not only in the same shape, but also in the same size. In addition, "local electrodes" refers to dotted electrodes.

In the above-described resistive film type touch panel device, the voltage applying unit may apply voltage to two local electrodes, as a pair of local electrodes, provided on a single resistive film.

With this configuration, the resistive film type touch panel device can be configured similar to arrangement of electrodes of a conventional and general analog resistive film type touch panel device.

In the above-described resistive film type touch panel device, the voltage applying unit may apply voltage to two local electrodes, as a pair of local electrodes, provided on the respective resistive films.

With this configuration, strong non-linearity can be obtained as compared with a case in which voltage is applied to two local electrodes provided on a single resistive film. Accordingly, the detection accuracy of the positions of the contact points can be enhanced.

In the above-described resistive film type touch panel device, the voltage applying unit may apply voltage to a pair of local electrodes located at point-symmetric positions with respect to a midpoint of each of the resistive films.

With this configuration, voltage is applied to the pairs of local electrodes that are located apart from each other as far as possible on the touch panel device. Thus, non-linear electric potential can be entirely (as uniformly as possible) generated on the touch panel device. Accordingly, even when any positions on the touch panel device are touched, the positions of the contact points can be detected with stable accuracy.

In the above-described resistive film type touch panel device, with the two resistive films being in a rectangular shape (oblong shape) and the local electrodes being arranged at, at least, one combination of opposing vertexes, the voltage applying unit may apply voltage to, as one combination of pairs of local electrodes, a pair of local electrodes located at the opposing vertexes.

With this configuration, in the case where the resistive films are in a rectangular shape, the distance between the opposing vertexes where the local electrodes are arranged is the largest. Accordingly, due to the same reason as above, even when any positions on the touch panel device are touched, the positions of the contact points can be detected with stable accuracy.

In the above-described resistive film type touch panel device, the plurality of local electrodes may be evenly arranged on the respective sides of the two resistive films.

With this configuration, when assuring that the combinations of the pairs of local electrodes to which voltage is applied are changed a plurality of times, voltage values that largely differ from each other can be measured in the case where one pair of local electrodes are located as far as possible from another combination of a pair of local electrodes. On the other hand, it is desirable that the local electrodes be provided on the sides of the resistive films due to the reasons such as securing of operation areas and wiring. Specifically, it is realistic and preferable in the aspect of detection accuracy that the local electrodes are evenly arranged on the respective sides.

In the above-described resistive film type touch panel device, the plurality of local electrodes may be arranged on the respective sides of the two resistive films in such a manner that intersection angles of line segments each connecting the pair of local electrodes to each other are evenly formed.

With this configuration, the intersection angles of the line segments each connecting the pair of local electrodes are evenly formed. Thus, non-linear electric potential can be entirely (as uniformly as possible) generated on the touch panel device. Accordingly, even when any positions on the touch panel device are touched, the positions of the contact points can be detected with stable accuracy.

In the above-described resistive film type touch panel device, the computation unit may repeat the numeric value computation based on the non-linear equation with the number of contact points initially set at N (N is a constant number satisfying N≥1) while changing the positions of the contact points. When a difference between the measurement voltage values and the calculation voltage values does not converge in a certain error range within a predetermined number of times, the numeric value computation may be repeated with the number of contact points increased or decreased one by one until convergence to simultaneously obtain the number of contact points and the positions of the contact points.

To obtain the positions of the contact points by solving the non-linear equation, the number of contact points has to be already known. With this configuration, the initial value of the number of contact points is set as a constant number, and thereafter, it is only necessary to repeat the numeric value computation with the number of contact points increased or decreased one by one. Thus, the calculations can be easily performed.

The above-described resistive film type touch panel device may further include a storage storing therein the number of contact points that corresponds to a previous computation result of the computation unit. The computation unit may repeat the numeric value computation based on the non-linear equation while changing the positions of the contact points by using the number of contact points stored in the storage storing therein the number of contact points as an initial value. When a difference between the measurement voltage values and the calculation voltage values does not converge in a certain error range within a predetermined number of times, the numeric value computation may be repeated with the number of contact points increased or decreased one by one until convergence to simultaneously obtain the number of contact points and the positions of the contact points.

When the previous number of contact points is n, there is a high possibility that the number of contact points of this time is also n, or a number approximate to n. With this configuration, by setting the number of contact points that is the previous computation result as an initial value, the amount of computations can be reduced.

The present invention also provides a program that causes a computer to function as the component units in the above-described resistive film type touch panel device.

By using the program, it is possible to realize an analog type resistive film type touch panel device that can detect the number of contact points and the positions of the contact points when a plurality of positions are simultaneously touched.

BRIEF DESCRIPTION OF THE DRAWINGS

[Fig. 1] Fig. 1 is a diagram for explaining an outline of a touch panel applied to a resistive film type touch panel device according to an embodiment of the present invention.

[Fig. 2] Fig. 2 is a control block diagram of the touch panel device.

[Fig. 3] Fig. 3 is a diagram for explaining electric potential generated on the touch panel.

[Fig. 4] Fig. 4 is a diagram for explaining boundary conditions.

[Fig. 5] Fig. 5 is a diagram for explaining grids for numerically obtaining voltage values.

[Fig. 6] Fig. 6 is a diagram for showing another example of arrangement of local electrodes.

[Reference Numerals]

| 1 | resistive film type touch panel device |
|---|---|
| 11, 12 | resistive film |
| 20 | interface device |
| 21 | electrode changing switch |
| 22 | noise filter |
| 23 | A/D converter |
| 24 | CPU |
| 25 | RAM |
| 26 | interface driver 30,31,32,33 equipotential line |

| 100 | higher-level device |
| TP | touch panel |

BEST MODES FOR CARRYING OUT THE INVENTION

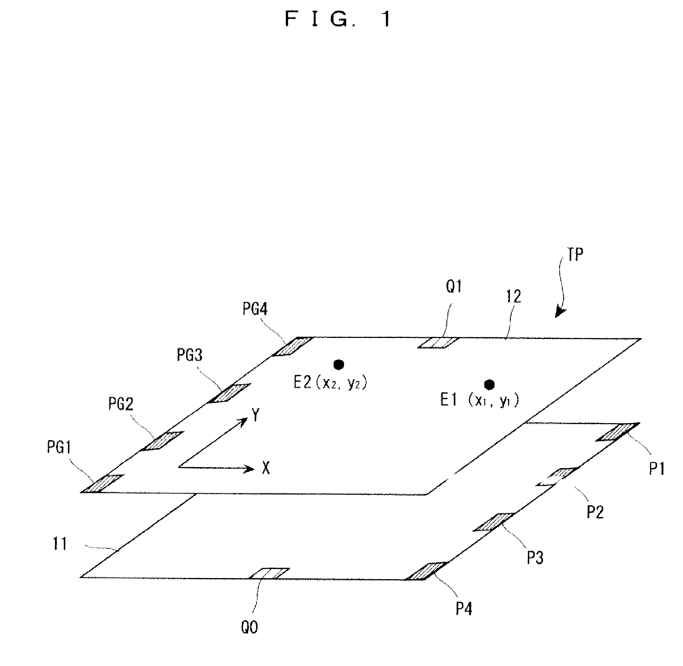

A resistive film type touch panel device, a program, and a method for detecting contact in a resistive film type touch panel device according to an embodiment of the present invention will be described hereinafter in detail with reference to the accompanying diagrams. Fig. 1 is a diagram for explaining an outline of a touch panel TP applied to a resistive film type touch panel device 1 (hereinafter, simply referred to as "touch panel device 1") of the present invention.

The touch panel TP of the embodiment is a resistive film type touch panel including two resistive films (Indium Tin Oxide (ITO) films) 11 and 12 that are oppositely arranged with a minute gap (a few micrometers to hundreds of micrometers in general) of dot spacers (a plurality of minute elastic bodies) interposed therebetween, and a plurality of electrodes that are provided on the sides (peripheral portions) of the two resistive films 11 and 12. The two resistive films 11 and 12 are oppositely arranged in a state where the films are attached to respective substrates (a permeable transparent film and a glass plate). However, the substrates are not illustrated.

The two resistive films 11 and 12 have substantially the same shape and size, and are formed in a rectangular shape in planar view. Furthermore, local electrodes (point electrodes) are employed for all of the plurality of electrodes. In addition, the touch panel TP of the embodiment includes a total of 10 local electrodes of four voltage-applied electrodes P1 to P4 arranged along the right side of one resistive film 11 (the resistive film on the lower side of the drawing), one voltage measurement electrode Q0 arranged on the upper side (the side on the near side of the drawing) of the resistive film 11, four voltage-applied electrodes PG1 to PG4 arranged along the left side of the other resistive film 12 (the resistive film on the upper side of the drawing), and one voltage measurement electrode Q1 arranged on the lower side (the side on the depth side of the drawing) of the resistive film 12.

The voltage-applied electrodes P1 to P4 and PG1 to PG4 are evenly arranged on the respective sides in the Y direction (the depth direction of the drawing). Of each four local electrodes, two electrodes are arranged at the respective vertexes of each of the resistive films 11 and 12. In this manner, the voltage-applied local electrodes are evenly arranged while being apart from each other as far as possible, so that one or more positions of contact points (for example, two positions of E1 and E2) can be efficiently detected. On the other hand, each of the voltage measurement electrodes is arranged at the midpoint of each side in the X direction (the width direction of the drawing) .

As described above, in the case where the local electrodes are arranged, when voltage is applied to combinations of, for example, the local electrodes P1 and PG1, the local electrodes P2 and PG2, the local electrodes P3 and PG3, and local electrodes P4 and PG4 to measure the voltage using the two voltage measurement electrodes Q0 and Q1, eight kinds of voltage (4 (the number of combinations of the voltage-applied electrodes located at point-symmetric positions) x 2 (the number of voltage measurement electrodes)) can be measured, and two-dimensional position coordinates for simultaneous contact points at four positions can be detected by performing a numeric value computation using these eight measurement voltages. In this manner, by selecting a pair of local electrodes located apart from each other as far as possible on the resistive films 11 and 12 and applying voltage to them, non-linear electric potential can be uniformly generated on the entire touch panel TP. Accordingly, whatever position that is touched on the panel TP can be detected with stable accuracy. In addition, by combining two local electrodes provided on the respective resistive films 11 and 12, high non-linearity can be obtained as compared with a case in which voltage is applied to two local electrodes provided on a single resistive film. Thus, the detection accuracy of the positions of the contact points can be enhanced.

The voltage-applied electrodes to which no voltage is applied can be used as electrodes for voltage measurement, and thus simultaneous contact can be detected at eight or more positions even in the arrangement of the electrodes shown in Fig. 1. Furthermore, the embodiment is not limited to the four combinations of the voltage-applied electrodes, and other combinations can be employed (for example, the local electrodes P1 and PG2, the local electrodes P2 and PG3, and the like). Thus, more simultaneous contact points can be detected by increasing the number of combinations.

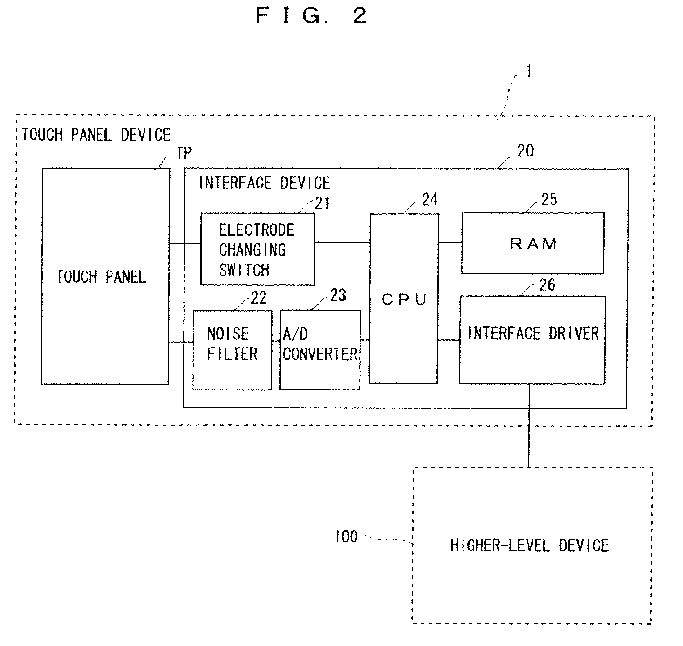

Next, a control configuration of a touch panel device 1 will be described with reference to Fig. 2. As shown in the drawing, the touch panel device 1 includes the touch panel TP shown in Fig. 1 and an interface device 20. The interface device 20 has an electrode changing switch 21, a noise filter 22, an A/D converter 23, a central processing unit (CPU) 24, a RAM 25, and an interface driver 26. In addition, the touch panel device 1 is coupled to a higher-level device 100 (host device) via the interface driver 26.

The CPU 24 selectively applies voltage to the plurality of voltage-applied electrodes provided on the two resistive films 11 and 12 (voltage applying unit). The electrode changing switch 21 changes the combinations of the voltage-applied electrodes under the control of the CPU 24. In addition, the CPU 24 measures voltage values using the voltage measurement electrodes (voltage measurement unit), and obtains the number of contact points (the number of simultaneously touched positions) on the touch panel TP and the positions of the contact points by using the measurement result (computation unit).

Specifically, the CPU 24 applies voltage while selecting one of, for example, the four combinations of the voltage-applied electrodes, and measures voltage values at the voltage measurement electrodes Q0 and Q1. Similarly, the CPU 24 applies voltage while changing the combination of the voltage-applied electrodes, and measures voltage values at the voltage measurement electrodes Q0 and Q1. A numeric value computation is repeated so that a plurality of measurement voltage values obtained by repeating the measurement a plurality of times become substantially equal to calculation voltage values based on a non-linear equation (partial difference equation) to be described later. Accordingly, the number of contact points (two points of E1 and E2 in the example of Fig. 1) and the positions of the contact points $((x_1, y_1), (x_2, y_2)$ in the example of Fig. 1) are obtained.

On the other hand, the RAM 25 is used as a work area where the CPU 24 performs various computation processes. Furthermore, when the CPU 24 obtains the positions of the contact points based on the non-linear equation, it is necessary to assign the number n of contact points as a tentative value. However, the number of previously detected contact points (which is the previous computation result) is used as an initial value in the embodiment. Accordingly, the RAM 25 is used also for storing the initial value (the previous number of contact points) (storage storing therein the number of contact points). In general, when the number of previously detected contact points is n points, there is a high possibility that the number of contact points of this time is also n points, or a number approximate to n points. Thus, the number of previously detected contact points is used as an initial value, so that the amount of computations can be decreased and a control load on the CPU 24 can be reduced.

Because data in the RAM 25 are initialized after turning on the power, the CPU 24 solves the non-linear equation by using a preliminarily set constant number (for example, the number "one" of contact points) as an initial value.

Furthermore, the CPU 24 is provided in the interface device 20 in the block diagram of Fig. 2, but can be omitted. In this case, the touch panel TP is controlled by a CPU (not shown in the drawing) in the higher-level device 100, and the number of previously detected contact points is stored in a RAM coupled to the CPU in the higher-level device 100.

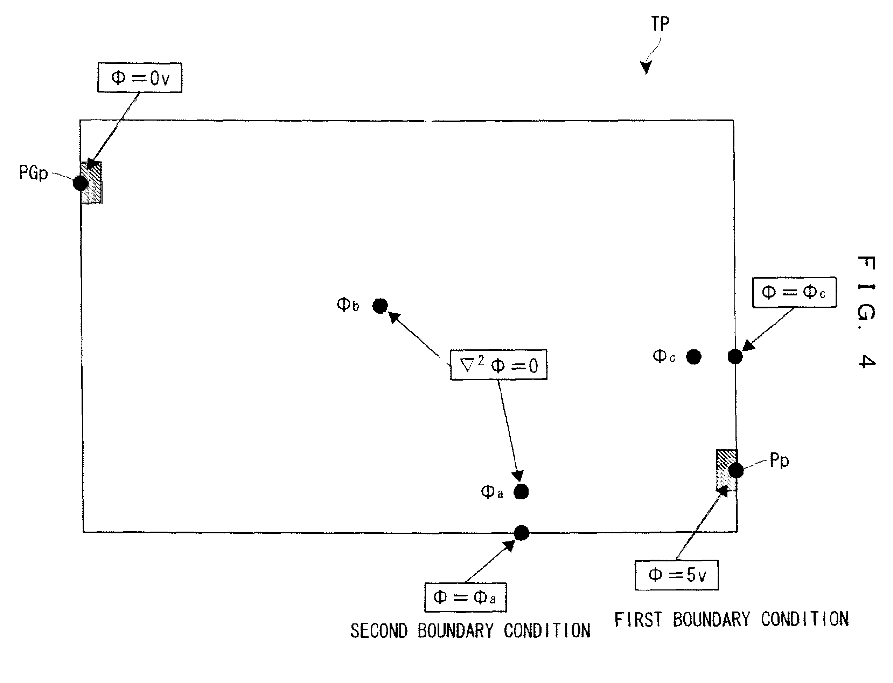

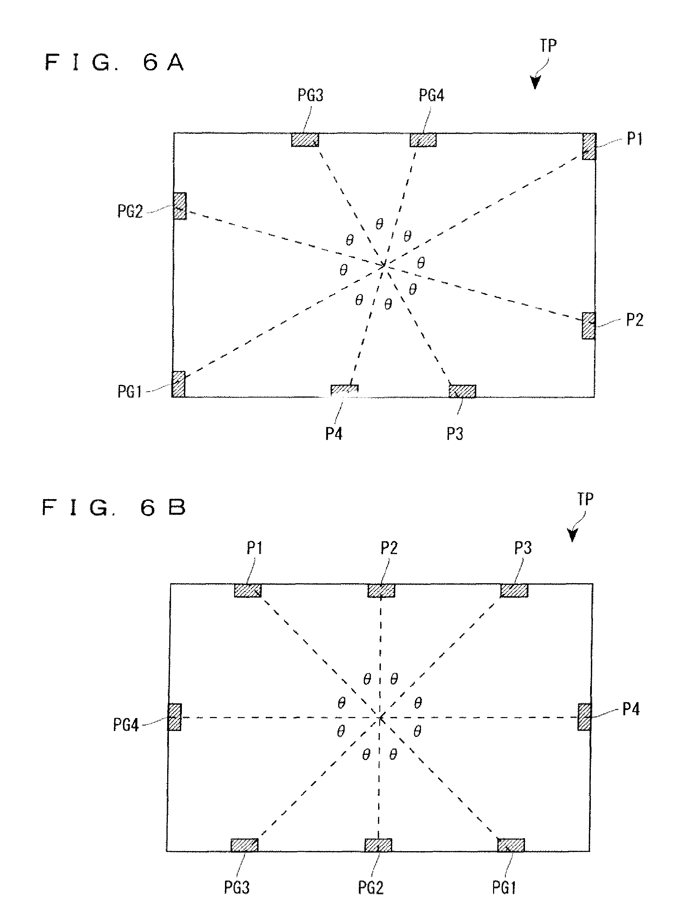

Next, electric potential generated in the touch panel TP will be described with reference to Fig. 3. The drawing shows distribution of electric potential when the number of combinations of the voltage-applied electrodes is two (the local electrodes P2 and PG2 and the local electrodes P4 and PG4), and two points (E1 and E2) are simultaneously touched. Furthermore, an equipotential line caused by the local electrodes P2 and PG2 (the dotted line in the drawing) is represented by a dotted bold line 30, and equipotential lines caused by the local electrodes P4 and PG4 (the solid straight line in the drawing) are represented by solid bold lines 31, 32, and 33 in the drawing. The equipotential lines 30, 31, 32, and 33 are orthogonal to the respective sides of the touch panel TP (resistive films 11 and 12). Herein, the local electrodes are shown in an enlarged manner for the sake of clarification (the same applies to Fig. 4 and Fig. 6).

In the example of the drawing, for example, when a voltage of 5 V is applied to the local electrode P2 and a voltage of 0 V is applied to the local electrode PG2, the dotted heavy line 30 shows an equipotential line of about 3 V. In this manner, because the local electrodes are employed in the touch panel TP of the embodiment, electric potential is non-linearly generated. By using the electric potential non-linearly generated, different voltage values twice or more the number of contact points are measured, and a non-linear equation of electric potential is solved by an iterative method so as to obtain values substantially equal to the measurement voltage values. Accordingly, the positions of the contact points can be separately (for each contact point) detected.

Computation processes (method of detecting the number of contact points and the positions of the contact points) for obtaining the number of contact points and the positions of the contact points will be concretely described hereinafter. In the first place, the electric potential generated on the resistive films 11 and 12 is the scalar potential of an electric field, and thus Equation (1) is established. Furthermore, electric potential obtained by passing steady current through uniform thin conductive plates (resistive films 11 and 12) satisfies the following Laplace equation.

[Formula 1]

$\vec{E}$ : electric field

$$\vec{E} = -\nabla\Phi \qquad \cdots\cdots (1)$$

$\Phi$ : electroatatic potential
(electric potential)

A derivation method will be described hereinafter. When the conductivity of a conductor is represented by $\rho$, Equation (2) is established by Ohm's law. Furthermore, when Equation (2) is substituted into the charge conservation law and Equation (1) is further substituted, Equation (3) can be obtained.

[Formula 2]

$$\vec{i} = \frac{\vec{E}}{\rho} \qquad \cdots (2)$$

from the charge conservation low

$$\nabla \bullet \vec{i} = 0$$

when Equation (2) is substituted:

$$\nabla \bullet \frac{\vec{E}}{\rho} = 0$$

when Equation (1) is substituted:

$$\nabla \bullet \nabla \Phi = \nabla^2 \Phi = 0 \qquad \cdots (3)$$

A description will be made for boundary conditions of peripheral portions of the touch panel TP. In the case where voltage is applied to the local electrodes, the electrode portions serve as equipotential portions and Equation (4) of the first boundary condition is established. Furthermore, Equation (5) of the second boundary condition is established in portions (portions where no current flows in and out) to which no voltage is applied.
[Formula 3] first boundary condition

$$\Phi = \text{constant value} \qquad \cdots (4)$$

second boundary condition

$$\vec{i} \bullet \vec{n} = 0$$

$$\nabla \Phi \bullet \vec{n} = 0 \qquad \cdots (5)$$

Fig. 4 shows the boundary conditions of Equation (4) and Equation (5). For example, when voltages of 5 V and 0 V are applied to the local electrodes Pp and PGp, respectively, values of electrostatic potential (electric potential) at the two local electrodes become constant based on the first boundary condition ($\Phi=5$ V and $\Phi=0$ V). Furthermore, the second boundary condition is established at the boundary portion of the touch panel except the voltage-applied electrodes. The second boundary condition shows that the equipotential line is orthogonal to the boundary, and thus it can be assumed that the electric potential at the boundary portion where the second boundary condition is established is the same as the electric potential inside the touch panel on the normal of the boundary portion ($\Phi=\Phi_a$). Furthermore, the Laplace equation is established for grid electric potential within the boundary ($\nabla^2\Phi=0$) . The Laplace equation is applied to a two-dimensional plane in this context, and thus quadratic partial differential equation (6) of x and y can be obtained.

[Formula 4]

$$\nabla^2 \Phi = 0 \implies \frac{\partial^2 \Phi(x,y)}{\partial x^2} + \frac{\partial^2 \Phi(x,y)}{\partial y^2} = 0 \cdots (6)$$

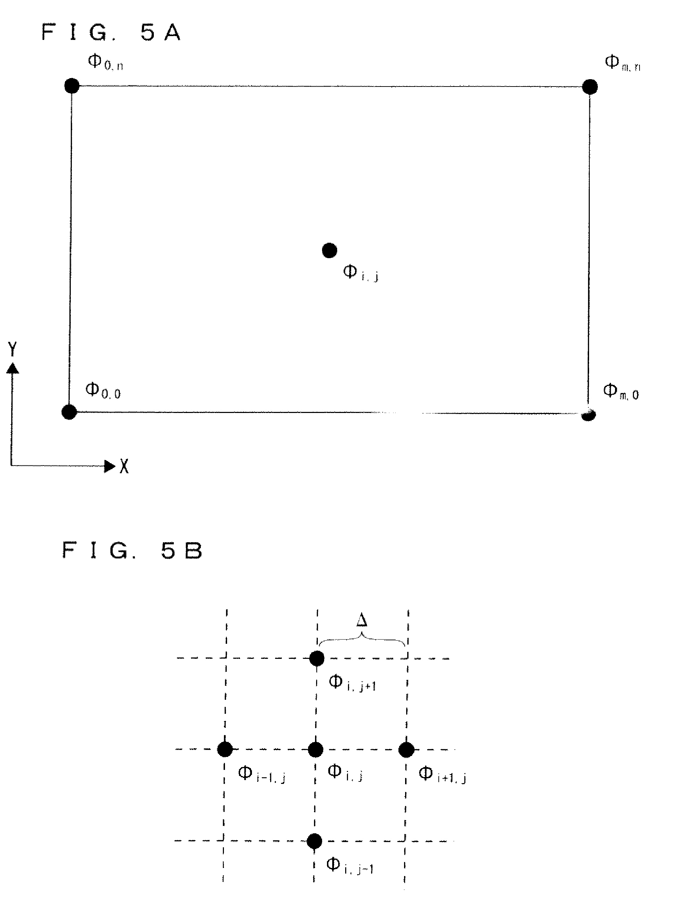

The partial differential equation of Equation (6) can be solved only numerically because it has no analytical solution under the boundary conditions such as Equation (4) and Equation (5). Accordingly, to obtain the electric potential at regular intervals, a grid with which a voltage value is numerically obtained is assumed as shown in Fig. 5(a). The adjacent grids are assumed as shown in Fig. 5(b). When difference approximation is carried out by using electric potential of each grid, a second order partial differential in the X direction is represented as Equation (7), and similarly, a second order partial differential in the Y direction is represented as Equation (8) . By substituting Equation (7) and Equation (8) into Equation (6) to calculate $\Phi_{i,\,j}$, Equation (9) can be obtained.

[Formula 5]

$$\frac{\partial \Phi(x,y)}{\partial x}$$

$$\cong \frac{\Phi(x+\Delta, y) - \Phi(x,y)}{\Delta}$$

$$= \frac{\Phi_{i+1,j} - \Phi_{i,j}}{\Delta}$$

second order partial differential

$$\frac{\partial^2 \Phi(x,y)}{\partial x^2}$$

$$\cong \frac{\dfrac{\partial \Phi(x,y)}{\partial x} - \dfrac{\partial \Phi(x-\Delta,y)}{\partial x}}{\Delta}$$

$$\cong \frac{\dfrac{\Phi(x+\Delta,y)-\Phi(x,y)}{\Delta} - \dfrac{\Phi(x,y)-\Phi(x-\Delta,y)}{\Delta}}{\Delta}$$

$$= \frac{\Phi(x+\Delta,y)-2\Phi(x,y)+\Phi(x-\Delta,y)}{\Delta^2}$$

$$= \frac{\Phi_{i+1,j}-2\Phi_{i,j}+\Phi_{i-1,j}}{\Delta^2} \qquad \cdots (7)$$

$$\frac{\partial^2 \Phi(x,y)}{\partial y^2} \cong \frac{\Phi_{i,j+1}-2\Phi_{i,j}+\Phi_{i,j-1}}{\Delta^2} \qquad \cdots (8)$$

$$\frac{\Phi_{i+1,j}-2\Phi_{i,j}+\Phi_{i-1,j}}{\Delta^2} + \frac{\Phi_{i,j+1}-2\Phi_{i,j}+\Phi_{i,j-1}}{\Delta^2} = 0$$

$$\Phi_{i+1,j}-2\Phi_{i,j}+\Phi_{i-1,j}+\Phi_{i,j+1}-2\Phi_{i,j}+\Phi_{i,j-1} = 0$$

$$\Phi_{i,j} = \frac{\Phi_{i+1,j}+\Phi_{i-1,j}+\Phi_{i,j+1}+\Phi_{i,j-1}}{4} \qquad \cdots (9)$$

Equation (9) implies that the electric potential of a grid can be obtained numerically as an average value of electric potentials of four grids around that grid. Therefore, initial voltage values are set for the respective grids and, with values obtained by applying Equation (9) to all the grids as initial values again, Equation (9) is repeatedly calculated until Equation (9) becomes statically determinate. However, the grids on the boundary follow the boundary condition equations represented as the following Equation (10) to Equation (14), instead of Equation (9).
[Formula 6]

first boundary condition

$$\Phi_{i,j} = V_{in} \qquad V_{in} : \text{electrod voltage} \qquad \cdots (10)$$

second boundary condition

$$\Phi_{0,j} = \Phi_{1,j} \qquad : \text{grid on the boundary parallel to Y}$$

$$\text{axis} \cdots (11)$$

$$\Phi_{m,j} = \Phi_{m-1,j} : \text{grid on the boundary parallel to Y axis} \cdots$$

$$(12)$$

$$\Phi_{i,0} = \Phi_{i,1} \qquad : \text{grid on the boundary parallel to X axis} \cdots (1$$

$$3)$$

$$\Phi_{i,n} = \Phi_{i,n-1} \qquad : \text{grid on the boundary parallel to X axis} \cdots$$

$$(14)$$

As described above, the electric potential of the grids on the electrodes follows the first boundary condition, and is accordingly represented as Equation (10). In addition, the electric potential of the grids on the edge of the resistive film except the electrodes follows the second boundary condition, and is accordingly represented as Equation (11) to Equation (14).

Was described above, the electric potential of each grid when one or less point is touched can be obtained by numeric value calculations using Equation (1) to Equation (14). However, when two or more points are touched, the electric potential at the contact points depends on the electric potential of the two resistive films 11 and 12, and it is accordingly necessary to simultaneously obtain the electric potential of the two resistive films 11 and 12. A numeric value computation method for a relation between the two resistive films 11 and 12 will be described below.

In the embodiment, because each electric potential of the two resistive films 11 and 12 is the scalar potential of the electric field, Equation (20) and Equation (21) are established. Furthermore, when the conductivity of each of the resistive films 11 and 12 is represented by ρ, Equation (22) and Equation (23) are established by Ohm's law.

[Formula 7]

$$\vec{E}_{IN} = -\nabla\Phi_{IN} \quad \cdots \cdot (20)$$

$\vec{E}_{IN}$ : electric field of resistive

$$\vec{E}_{ONT} = -\nabla\Phi_{OUT} \quad \cdots \cdot (21)$$

$\vec{E}_{OUT}$

film on the voltage application side $\vec{E}_{OUT}$ : electric field of resistive film on the detection side $\Phi IN$ : electrostatic potential (electric potencial) of resistive film on the voltage application side $\Phi_{OUT}$ : electrostatic potential (electric potencial) of resistive film on the voltage detection side from Ohm's law

$$\vec{i}_{IN} = \frac{\vec{E}_{IN}}{\rho_{IN}} \quad \cdots \cdot (22)$$

$$\vec{i}_{OUT} = \frac{\vec{E}_{OUT}}{\rho_{OUT}} \quad \cdots \cdot (23)$$

Furthermore, points except the contact points when one point is touched or a plurality of points are touched can be considered to be handled in the same way as the case when no point is touched based on the charge conservation law (refer to [Formula 2]). However, at the contact points when a plurality of points are touched, current flows between the two resistive films 11 and 12, and absolute values of its outflow and inflow are the same. Thus, Equation (24) and Equation (25) are established at the k-th contact point. In addition, when Equation (22) and Equation (23) are substituted into Equation (24) and Equation (25), Equation (26) and Equation (27) can be obtained. Furthermore, Equation (20) and Equation (21) are substituted into Equation (26) and Equation (27), whereby Equation (28) and Equation (29) can be obtained. If it is assumed that the conductivity ρ of the resistive film 11 is equal to that of the resistive film 12, Equation (30) and Equation (31) can be obtained.

[Formula 8]

$$\nabla \bullet \vec{i}_{IN,k} = C_k \qquad \cdots \cdots (24)$$

$$\nabla \bullet \vec{i}_{OUT,k} = -C_k \qquad \cdots \cdots (25)$$

$$\nabla \bullet \frac{\vec{E}_{IN,k}}{\rho_{IN}} = C_k \qquad \cdots \cdots (26)$$

$$\nabla \bullet \frac{\vec{E}_{OUT,k}}{\rho_{OUT}} = -C_k \qquad \cdots \cdots (27)$$

$$\nabla^2 \Phi_{IN,k} = \rho_{IN} C_k \qquad \cdots \cdots (28)$$

$$\nabla^2 \Phi_{OUT,k} = -\rho_{OUT} C_k \qquad \cdots \cdots (29)$$

$$\nabla^2 \Phi_{IN,k} + \nabla^2 \Phi_{OUT,k} = 0 \qquad \cdots \cdots (30)$$

$$\frac{\partial^2 \Phi_{IN}(x_k, y_k)}{\partial x^2} + \frac{\partial^2 \Phi_{IN}(x_k, y_k)}{\partial y^2} + \frac{\partial^2 \Phi_{OUT}(x_k, y_k)}{\partial x^2} + \frac{\partial^2 \Phi_{OUT}(x_k, y_k)}{\partial y^2} = 0$$

$$\cdots \cdots (31)$$

To numerically obtain the electric potential of the grid, if the difference equation of Equation (31) is considered as the same as Equation (9), Equation (32) can be obtained. Furthermore, two kinds of electric potential on the left-hand side of Equation (32) are equal to each other due to short circuit caused by contact. Thus, Equation (33) is established.

[Formula 9]

$$\Phi_{IN_k(i.j)} + \Phi_{OUT_k(i.j)} = \frac{\Phi_{IN_k(i+1.j)} + \Phi_{IN_k(i-1.j)} + \Phi_{IN_k(i.j+1)} + \Phi_{IN_k(i.j-1)}}{4}$$
$$+ \frac{\Phi_{OUT_k(i+1.j)} + \Phi_{OUT_k(i-1.j)} + \Phi_{OUT_k(i.j+1)} + \Phi_{OUT_k(i.j-1)}}{4}$$

$$\cdots\cdots (3\,2)$$

$$\Phi_{IN_k(i.j)} = \Phi_{OUT_k(i.j)}$$
$$= \frac{1}{8}\Big(\Phi_{IN_k(i+1.j)} + \Phi_{IN_k(i-1.j)} + \Phi_{IN_k(i.j+1)} + \Phi_{IN_k(i.j-1)}$$
$$+ \Phi_{OUT_k(i+1.j)} + \Phi_{OUT_k(i-1.j)} + \Phi_{OUT_k(i.j+1)} + \Phi_{OUT_k(i.j-1)}\Big)$$

$$\cdots\cdots (3\,3)$$

Subsequently, a case in which n (k=1 to n) points are simultaneously touched is assumed. To obtain the positions of n contact points, it is necessary to measure output electric potential using 2n (1=1 to 2n) different combinations of the local electrodes. Furthermore, the electric potential of the voltage measurement electrodes is shown by the non-linear equation for the position (x, y), and is represented by the differential equation and the boundary conditions without an analytical solution, as described above. Formally, the output voltage of the voltage measurement electrodes can be represented by 2n non-linear simultaneous equations having 2n unknown variables, as shown in Equation (34).

[Formula 10]

$$V_l = V_l\big(x_1, \cdots, x_n, y_1, \cdots y_n\big) \qquad\cdots\cdots (3\,4)$$

If the non-linear simultaneous equation of Equation (34) is solved, the positions of n contact points that are simultaneously touched can be obtained. However, it is impossible to analytically solve the non-linear equation itself as described above. The non-linear simultaneous equation that is difficult to be analytically solved is generally solved in such a manner that an appropriate initial value is set to a parameter, Equation (34) is expanded with values approximate to the initial value to produce a linear equation for an error of the parameter with respect to the initial value. The value obtained by adding the error with respect to the initial value of the parameter that solved the linear equation to the initial value of the parameter still has an error with respect to the true value of the parameter in general. Accordingly, the non-linear equation is expanded and calculated again by using the value as an initial value to obtain an error of the parameter, and these procedures are repeated until the error of the parameter to be obtained becomes sufficiently small (falls within a predetermined error range). The formula used for the calculation is shown hereinafter. Equation (34) is expanded with values approximate to the initial value of the parameter (the positions of the contact points), and Equation (35) can be obtained as a linear equation for the error of the parameter.

[Formula 11]

$$_0V_l + \sum_{k=1}^{n}\left\{\frac{\partial_0 V_l}{\partial x}\Delta_0 x_k + \frac{\partial_0 V_l}{\partial y}\Delta_0 y_k\right\} \cong V_l \quad \cdots \cdot (35)$$

$_0x_k$ : $x$ coordinate initial value of point $k$ $_0y_k$ : $y$ coordinate initial value of point $k$ $\Delta_0 x_k$: $x$ coordinate error of point $k$ $\Delta_0 x_k$ : $y$ coordinate error of point $k$

Equation (35) is linear with respect to a coordinate error, and thus can be numerically solved by a sweeping-out method or the like. As shown in Equation (36), when the value obtained by adding the obtained coordinate error to the initial value is set as a new initial value, Equation (37) is established for the new initial value.

[Formula 12]

$$_l x_k = {}_0 x_k + \Delta_0 x_k$$
$$_l y_k = {}_0 y_k + \Delta_0 y_k \qquad \cdots \cdot (36)$$

$$_1V_l + \sum_{k=1}^{n}\left\{\frac{\partial_1 V_l}{\partial x}\Delta_1 x_k + \frac{\partial_1 V_l}{\partial y}\Delta_1 y_k\right\} \cong V_l \quad \cdots \cdot (37)$$

Equation (37) is solved in a manner similar to Equation (35) to obtain the coordinate error. The procedures are repeated until the coordinate error becomes sufficiently small to obtain the coordinate values. Because there are no analytical solutions for output voltage and the partial differential value of output voltage in Equation (35), the value that is numerically obtained as described above is used.

As being apparent from the above description, the number of contact points is generally necessary for obtaining the positions of the contact points (coordinate values). Thus, the solution is obtained by reading the number n of contact points in the previous sampling (namely, on the assumption that the number of contact points of this time is n) from the RAM 25. When the number n of contact points is not correct, the solution cannot be obtained with high accuracy, and thus the solution is repeatedly obtained until the accurate solution is obtained with the value n increased or decreased (for example, n, n+1, n-1, n+2, n-2, and so on). Accordingly, the number n of contact points and the positions of the contact points can be simultaneously obtained. Alternatively, the coordinates of the positions of the contact points may be obtained by using other numeric value computation methods, such as a CG method (conjugate gradient method), instead of the above-described numeric value computation method.

As described above, according to the embodiment, the plurality of local electrodes are arranged on the two resistive films 11 and 12 to generate non-linear electric potential, and the measurement result is solved by using the above-described computation processes, so that the positions of the contact points when a plurality of positions are simultaneously touched can be obtained with accuracy even in an analog resistive film type touch panel device. Specifically, employing the touch panel device 1 in the embodiment enables simultaneous manipulation at a plurality of positions.

Accordingly, the analog resistive film type touch panel devices can be applied to the fields of, for example, DJ equipment (players, mixers, and the like), electronic music instruments, MIDI controllers, and the like where complicated and intuitive manipulation is required. Furthermore, convenience can be enhanced in various fields (game machines, touch panel type computers, PDAs, mobile phones, ATMs of banks, and the like) where the touch panels are already used. Furthermore, the touch panels can be applied, as device manipulation panels manipulated by users, to even a field where use of the touch panel is avoided because a plurality of points cannot be simultaneously detected.

It should be noted that, although the plurality of voltage-applied local electrodes are evenly arranged on the respective sides in the embodiment as shown in Fig. 1, the plurality of voltage-applied local electrodes may be arranged in such a manner that intersection angles of line segments each connecting a pair of local electrodes to each other are evenly formed as shown in Fig. 6(a). In this case, it is also preferable that voltage be applied to pairs of local electrodes located at point-symmetric positions with respect to the midpoint of the touch panel TP. With this configuration, non-linear electric potential can be entirely (as uniformly as possible) generated on the touch panel TP. Thus, even when touching any positions on the touch panel TP, the positions of the contact points can be detected with stable accuracy.

However, even in the case where the plurality of voltage-applied local electrodes are arranged in such a manner that intersection angles of line segments each connecting a pair of local electrodes to each other are evenly formed, it is preferable that the plurality of voltage-applied local electrodes be evenly arranged on the respective sides. Accordingly, the arrangement shown in Fig. 6(b) may be employed.

In the embodiment, voltage is applied to the two local electrodes provided on the respective resistive films. However, voltage may be applied to the two local electrodes provided on a single resistive film. In this case, voltage is measured with local electrodes provided on the other resistive film.

In the embodiment, both of the voltage-applied electrodes and the voltage measurement electrodes employ local electrodes. However, the design can be changed by replacing the voltage measurement electrodes with side electrodes, for example. Furthermore, the number of voltage measurement electrodes can be increased, or the arrangement thereof can be changed. In addition, voltage may be measured by using not only one voltage measurement electrode, but also a plurality of voltage measurement electrodes. Specifically, voltage can be measured by using one or more electrodes to which no voltage is applied.

In the embodiment, the non-linear equation is solved by using the previous number of contact points as an initial value. However, the numeric value computation may be repeated while the number of contact points is initially set at one and the positions of the contact points are increased one by one. Alternatively, the initial value can be set at not one but a constant number equal to two or larger in accordance with the application of the touch panel device 1.

In the embodiment, the non-linear equation is solved by using the plurality of measurement voltage values obtained by changing a plurality of times the combination of a pair of local electrodes to which voltage is applied. However, the non-linear equation may be solved by using a plurality of voltage values measured at a plurality of different electrodes upon single voltage application, instead of by changing a plurality of times the combination of a pair of local electrodes.

Furthermore, each unit in the touch panel device 1 shown in the example may be provided as a program. In addition, the program can be provided while being stored in a recording medium (not shown in the drawing). Specifically, a program that allows a computer to function as each unit of the touch panel device 1 and a recording medium in which the program is recorded are within the scope of the right of the present invention. In addition, the embodiment can be appropriately changed within a range without departing from the gist of the present invention.

**Claims**

1.  A resistive film type touch panel device comprising:

    two resistive films that are separated from each other by a minute gap and have substantially the same shape;
    a plurality of local electrodes that are provided on the two resistive films;
    a voltage applying unit that selectively applies voltage to the plurality of local electrodes;
    a voltage measurement unit that measures voltage values by using other electrodes to which no voltage is applied among the plurality of local electrodes; and
    a computation unit that obtains the number of contact points and positions of the contact points by using a plurality of measurement voltage values obtained by the voltage measurement unit with the voltage applying unit selectively applying voltage to at least one or more combinations of the local electrodes, wherein
    the computation unit obtains the number of contact points and the positions of the contact points by repeating a numeric value computation so that the plurality of measurement voltage values become substantially equal to calculation voltage values based on a non-linear equation.

2.  The resistive film type touch panel device according to claim 1, wherein
    the voltage applying unit applies voltage to two local electrodes, as a pair of local electrodes, provided on a single resistive film.

3.  The resistive film type touch panel device according to claim 1, wherein
    the voltage applying unit applies voltage to two local electrodes, as a pair of local electrodes, provided on the respective resistive films.

4. The resistive film type touch panel device according to claim 1, wherein
the voltage applying unit applies voltage to a pair of local electrodes located at point-symmetric positions with respect to a midpoint of each of the resistive films.

5. The resistive film type touch panel device according to claim 1, wherein
with the two resistive films being in a rectangular shape and the local electrodes being arranged at, at least, one combination of opposing vertexes,
the voltage applying unit applies voltage to, as one combination of pairs of local electrodes, a pair of local electrodes located at the opposing vertexes.

6. The resistive film type touch panel device according to claim 4 or 5, wherein
the plurality of local electrodes are evenly arranged on the respective sides of the two resistive films.

7. The resistive film type touch panel device according to claim 4 or 5, wherein
the plurality of local electrodes are arranged on the respective sides of the two resistive films in such a manner that intersection angles of line segments each connecting the pair of local electrodes to each other are evenly formed.

8. The resistive film type touch panel device according to claim 1, wherein
the computation unit repeats the numeric value computation based on the non-linear equation with the number of contact points initially set at N (N is a constant number satisfying $N \geq 1$) while changing the positions of the contact points, and when a difference between the measurement voltage values and the calculation voltage values does not converge in a certain error range within a predetermined number of times, the numeric value computation is repeated with the number of contact points increased or decreased one by one until convergence to simultaneously obtain the number of contact points and the positions of the contact points.

9. The resistive film type touch panel device according to claim 1, further comprising a storage storing therein the number of contact points that corresponds to a previous computation result of the computation unit, wherein
the computation unit repeats the numeric value computation based on the non-linear equation while changing the positions of the contact points by using the number of contact points stored in the storage storing therein the number of contact points as an initial value, and when a difference between the measurement voltage values and the calculation voltage values does not converge in a certain error range within a predetermined number of times, the numeric value computation is repeated with the number of contact points increased or decreased one by one until convergence to simultaneously obtain the number of contact points and the positions of the contact points.

10. A program causing a computer to function as the component units in the resistive film type touch panel device according to claim 1.

11. A method for detecting contact in a resistive film type touch panel device including two resistive films that are separated from each other by a minute gap and have substantially the same shape, and a plurality of local electrodes that are provided on the two resistive films, the method comprising:

selectively applying voltage to the plurality of local electrodes;
measuring voltage values by using other electrodes to which no voltage is applied among the plurality of local electrodes; and
computing to obtain the number of contact points and positions of the contact points by repeating a numeric value computation so that a plurality of measurement voltage values obtained by changing combinations of pairs of local electrodes to which voltage is applied for multiple times become substantially equal to calculation voltage values based on a non-linear equation.

# F I G. 1

# F I G.  2

TOUCH PANEL DEVICE

TP

INTERFACE DEVICE — 20

TOUCH PANEL

21
ELECTRODE
CHANGING
SWITCH

24
C P U

25
R A M

22
NOISE
FILTER

23
A/D
CONVERTER

26
INTERFACE DRIVER

1

100
HIGHER-LEVEL DEVICE

F I G. 3

# F I G.   4

F I G.  5 A

$\Phi_{0,n}$

$\Phi_{m,n}$

$\Phi_{i,j}$

Y

$\Phi_{0,0}$

$\Phi_{m,0}$

X

F I G.  5 B

$\Delta$

$\Phi_{i,j+1}$

$\Phi_{i-1,j}$    $\Phi_{i,j}$    $\Phi_{i+1,j}$

$\Phi_{i,j-1}$

F I G. 6 A

F I G. 6 B

<div align="center">**INTERNATIONAL SEARCH REPORT**</div>

| | International application No. |
|---|---|
| | PCT/JP2008/001105 |

**A. CLASSIFICATION OF SUBJECT MATTER**
*G06F3/045*(2006.01)i, *G06F3/041*(2006.01)i

According to International Patent Classification (IPC) or to both national classification and IPC

**B. FIELDS SEARCHED**

Minimum documentation searched (classification system followed by classification symbols)
G06F3/045, G06F3/041

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br><br>A | Microfilm of the specification and drawings annexed to the request of Japanese Utility Model Application No. 112192/1988(Laid-open No. 035235/1990)<br>(Oki Electric Industry Co., Ltd.),<br>07 March, 1990 (07.03.90),<br>Page 10, line 4 to page 20, line 7; all drawings<br>(Family: none) | 1,2,4,6,10,<br>11<br>3,5,7-9 |
| X<br><br>A | JP 06-149463 A  (Fujitsu Ltd.),<br>27 May, 1994 (27.05.94),<br>Full text; all drawings<br>(Family: none) | 1,2,4,6,10,<br>11<br>3,5,7-9 |

| ☒ | Further documents are listed in the continuation of Box C. | ☐ | See patent family annex. |
|---|---|---|---|

| | |
|---|---|
| * Special categories of cited documents:<br>"A" document defining the general state of the art which is not considered   to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>15 July, 2008 (15.07.08) | Date of mailing of the international search report<br>29 July, 2008 (29.07.08) |
|---|---|
| Name and mailing address of the ISA/<br>Japanese Patent Office | Authorized officer |
| Facsimile No. | Telephone No. |

Form PCT/ISA/210 (second sheet) (April 2007)

EP 2 270 638 A1

**INTERNATIONAL SEARCH REPORT**

International application No.

PCT/JP2008/001105

C (Continuation).   DOCUMENTS CONSIDERED TO BE RELEVANT

| Category* | Citation of document, with indication, where appropriate, of the relevant passages | Relevant to claim No. |
|---|---|---|
| X | JP 07-036600 A  (Fujitsu Ltd.), 07 February, 1995 (07.02.95), Par. Nos. [0021], [0027] to [0040]; Figs. 1 to 6 (Family: none) | 1,2,4,6,10, 11 |
| A | | 3,5,7-9 |

Form PCT/ISA/210 (continuation of second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000513433 A